# FASCICULE DE BREVET EUROPEEN

(11) **EP 0 720 820 B1**
(45) Date de publication et mention de la délivrance du brevet: **12.06.2002**
(21) Numéro de dépôt: 95402930.2
(22) Date de dépôt: 22.12.1995
(51) Int. Cl.: A23G 3/00, A23G 3/04

(54) **Sucre cuit et son procédé de fabrication**
Bonbon und Herstellungsverfahren
Hard candy and process for making the same

(30) Priorité: 26.12.1994 FR 9415648; 06.06.1995 US 470464
(43) Date de publication de la demande: 10.07.1996
(73) Titulaire: Roquette Frères, 62136 Lestrem (FR)
(72) Inventeur: Serpelloni, Michel, F-62660 Beuvry les Bethune (FR); Ribadeau-Dumas, Guillaume, F-59130 Lambersart (FR)
(74) Mandataire: Boulinguiez, Didier

(56) Documents cités:
- EP-A- 0 094 292
- EP-A- 0 561 088
- EP-A- 0 561 089
- EP-A- 0 593 368
- FR-A- 2 112 564
- FR-A- 2 532 156
- US-A- 3 332 783
- US-A- 3 826 857
- US-A- 4 753 816
- DATABASE WPI Week 7317, Derwent Publications Ltd., London, GB; AN 73-24181U, XP002048637 & JP-B-48 002 784 (CORN PRODUCTS CO.)

## Description

La présente invention a trait à un nouveau sucre cuit ayant une teneur en eau supérieure aux teneurs usuelles pour ce type de confiserie et présentant, malgré cette teneur en eau élevée, une très haute stabilité.

L'invention concerne également un procédé de fabrication de ce sucre cuit et l'utilisation, lors de sa production, d'une composition de carbohydrates particulière.

Les sucres cuits, appelés aussi communément bonbons durs, sont des produits de confiserie solides et essentiellement amorphes. Ils sont obtenus par déshydratation poussée de sirops de carbohydrates. Généralement, on procède à la cuisson de mélanges de saccharose pulvérulent et de sirops concentrés d'hydrolysats d'amidon, dans des proportions variant de 40/60 à 65/35 en poids commercial (soit environ 45/55 à environ 70/30 en poids sec). Ces mélanges contiennent d'ordinaire de l'eau en quantité suffisante pour dissoudre l'ensemble des cristaux de saccharose. On cuit ensuite ces mélanges jusqu'à 130-150°C à pression ambiante pour évaporer l'essentiel de l'eau, puis on termine la cuisson sous vide pour abaisser davantage encore la teneur en eau et l'amener à une valeur d'ordinaire inférieure à 3 %. On refroidit ensuite la masse plastique ainsi obtenue, jusqu'à atteindre une température comprise entre 125 et 140°C dans le cas d'un procédé de coulage en moules, ou une température comprise entre 90 et 115°C dans le cas d'un procédé de formage sur rouleaux ou d'extrusion. A ce stade, on ajoute alors différentes substances telles qu'arômes, colorants, édulcorants intenses, acides, extraits de plantes, vitamines, principes actifs pharmaceutiques. On obtient après formage ou coulage de la masse cuite et après retour à température ambiante, des sucres cuits présentant une texture et une apparence semblables à celles d'un verre.

On demande aux sucres cuits d'être stables au cours du temps, c'est à dire d'évoluer le moins possible depuis le moment où ils sont fabriqués jusqu'au moment où ils sont consommés, et cela pour rester des produits attrayants et agréables en bouche.

Or, les sucres cuits ne sont malheureusement pas des produits stables du point de vue thermodynamique. L'importance de leur évolution dépend essentiellement de leurs compositions après fabrication mais aussi des conditions dans lesquelles ils sont conservés.

En premier lieu, les sucres cuits peuvent devenir des produits collants lors du stockage. Lorsqu'ils sont papillotés, il devient alors difficile, voire impossible, d'éliminer leurs papiers d'emballage avant de les consommer. Ils peuvent aussi prendre en masse sans rester individualisés, ce qui est encore plus génant.

On explique cette évolution problématique vers un état collant et sirupeux, par des phénomènes de surface ou/et par des phénomènes en profondeur.

Les phénomènes de surface trouvent leur origine dans le caractère hygroscopique des sucres cuits. On sait en effet que les sucres cuits, produits presque anhydres par essence, présentent des humidités relatives d'équilibre toujours très basses, nettement inférieures aux humidités relatives ambiantes habituelles de stockage. Ceci explique qu'une reprise en eau a forcément lieu à la surface des bonbons dès qu'ils sont et restent exposés à l'air, comme c'est le cas des sucettes par exemple. Lorsque cette reprise en eau est suffisamment importante, elle tend à liquéfier la surface des bonbons et à leur communiquer les caractéristiques d'un sirop, c'est à dire en particulier à leur communiquer un caractère collant. Cette évolution apparaît d'autant plus rapidement que les sucres cuits présentent une teneur basse en eau.

Les phénomènes en profondeur, qui ne concernent donc pas uniquement la surface mais la totalité de la masse des bonbons, ont une origine thermique. Plus précisément, il convient, pour que ces phénomènes aient lieu, que la température de stockage dépasse quelque peu la température de transition vitreuse du sucre cuit. Cette notion à laquelle on se réfère ici est largement décrite dans l'excellent article "La transition vitreuse : incidences en technologie alimentaire" de M. Le Meste et D. Simatos publié dans I.A.A. de Janvier / Février, 1990. La température de transition vitreuse est la température à laquelle, par chauffage, un sucre cuit vitreux et solide devient un liquide sirupeux amorphe. Elle est habituellement déterminée par calorimétrie thermique différentielle.

On comprend très bien qu'un sucre cuit puisse être sujet à une déformation, voire à un écoulement complet, lorsque sa température de conservation est élevée et dépasse sa température de transition vitreuse. Le produit initialement sec au toucher devient collant. Il convient de noter que plus le sucre cuit en question est riche en eau, plus il est sujet à un risque d'évolution de cette nature durant sa conservation.

En conclusion, pour éviter que les sucres cuits ne deviennent des produits collants au stockage, il est toujours apparu nécessaire que leur teneur en eau ne soit ni trop faible, ni trop forte.

En second lieu, les sucres cuits peuvent avoir tendance lors du stockage à cristalliser de manière incontrôlée et de ce fait perdre leur aspect vitreux très attrayant, en ressemblant alors davantage à des sucres d'orge qui, comme on le sait, sont très différents des produits de confiserie auxquels on s'intéresse dans le cadre de la présente invention. Cette cristallisation peut avoir lieu seulement en surface du bonbon ou bien également au coeur du bonbon.

La cristallisation de surface nécessite inéluctablement une reprise en eau significative et correspond à un stade d'évolution complémentaire par rapport à celui décrit plus haut. Elle nécessite également une concentration suffisante en molécules cristallisables, en général des molécules de saccharose, dans la couche périphérique liquéfiée. Lorsque ces deux conditions sont réunies, on observe alors une cristallisation, qui s'opère depuis la surface du bonbon vers son centre. Ce phénomène, lorsqu'il est incontrôlé, est connu sous le nom de tournage. Il rend les bonbons totalement opaques et blancs.

La cristallisation peut avoir lieu aussi très directement au coeur du sucre cuit si celui-ci est très riche en eau ou si la température de stockage est trop forte. Dans ces conditions, le sucre cuit présente alors une mollesse excessive et ne peut plus être considéré comme un véritable solide. Il s'agit alors plutôt d'un liquide sursaturé en molécules cristallisables dont l'évolution vers un état cristallin est inéluctable et quasiment spontanée. Les spécialistes dénomment ce type de cristallisation sous le terme de grainage.

En définitive, pour éviter que les sucres cuits ne soient instables et ne deviennent au cours du temps des produits collants ou bien des produits tournés ou grainés, il a toujours semblé impératif d'ajuster d'une part leur teneur en eau et d'autre part leur teneur en molécules cristallisables, c'est-à-dire généralement leur teneur en saccharose.

Ces recommandations de base se trouvent dans la plupart des manuels de confiserie mais aussi dans bon nombre d'articles scientifiques. On peut par exemple citer l'article de J. KELLEHER et al. "The physico-chemical characteristics of boiled sweets" Scientific and Technology Survey, n° 41, Août 1963, BFMIRA, où il a été calculé que la teneur en eau d'un sucre cuit à base de saccharose devait être impérativement inférieure à 3,2 % pour qu'il conserve un aspect vitreux au cours du stockage.

Dans la pratique, il s'avère que la très grande majorité des confiseurs suivent cette recommandation de teneur en eau, laquelle s'est ancrée dans les esprits avec le temps.

De plus, l'expérience des confiseurs leur a prouvé, en ce qui concerne la quantité de saccharose à introduire en association avec les traditionnels sirops d'hydrolysats d'amidon, que le rapport conférant le maximum de stabilité aux sucres cuits doit être voisin de 50/50 en poids commercial.

Il convient de noter que les hydrolysats, obtenus par hydrolyse acide, ou acide et enzymatique de l'amidon sont toujours aujourd'hui quasiment les seuls sirops employés pour préparer des sucres cuits de sucre. Ces sirops présentent un dextrose équivalent (DE) compris entre 30 et 42 et une teneur en maltose sur sec compris entre 10 et 35 %. Il a pourtant été recommandé dans le passé d'utiliser des sirops de glucose de DE plus élevé et plus riches en maltose pour produire des sucres cuits contenant moins de 3 ou 4 % d'eau. On peut par exemple se référer aux brevets GB 1.349.492 et FR 1.420.929.

Pour des raisons économiques, certains confiseurs ont été amenés à enfreindre les recommandations établies depuis longtemps, données plus haut et relatives aux teneurs en eau et en saccharose et ont mis sur le marché des sucres cuits plus riches en eau, c'est-à-dire dépassant la valeur de 4 %, qui est considérée comme anormalement élevée pour ce genre d'articles de confiserie.

C'est ainsi que sont vendus, notamment en France, des sucres cuits contenant de 4,0 % à 5,3 % d'eau et de 45 à 50 % de saccharose. De tels sucres cuits sont obtenus par cuisson de mélanges contenant du saccharose pulvérulent et des hydrolysats acides d'amidon de DE voisin de 30 présents environ à parts égales en sec. L'emploi de ces hydrolysats fait que la teneur en maltose de ces bonbons est toujours très faible, généralement inférieure à 10 %. Ces sucres cuits sont instables par nature et tendent très rapidement à grainer, devenant par conséquent opaques et blancs. Par ailleurs, ces bonbons riches en eau présentent des températures de transition vitreuse relativement basses, de l'ordre de 36°C, et ont tendance de ce fait à se déformer et à devenir collants, notamment en période estivale.

On connaît également d'autres sucres cuits présentant une teneur en eau dépassant 4 %. Ils sont vendus en particulier aux Etats-Unis et sont presque exclusivement préparés en utilisant des hydrolysats d'amidon de DE compris entre 38 et 42. Leurs teneurs en saccharose et en maltose représentent moins de 10 % de leurs compositions commerciales. De tels sucres cuits sont également très instables. Ils deviennent en moins de quelques jours très collants lorsqu'ils sont exposés à l'air. De plus, leurs températures de transition vitreuse, très basses et voisines de 30°C seulement, les rendent particulièrement sensibles aux variations de température.

Il a également été proposé dans le brevet US 3.826.857 de préparer des sucres cuits peu hygroscopiques contenant de 4 à 8 % d'eau, de 40 à 70 % de saccharose et de 15 à 31,5 % de maltose par emploi d'une maltodextrine de DE compris entre 5 et 25. Rien n'est dit cependant quant à la stabilité thermique de ces sucres cuits. Il apparaît que ces sucres cuits sont très difficilement fondus ou formés en raison de la présence de maltodextrines.

Jusqu'à présent, il ne semble pas qu'il existe des solutions viables permettant de préparer des sucres cuits essentiellement amorphes, riches en eau et stables. De tels produits seraient pourtant avantageux à plusieurs titres, notamment en raison du fait qu'ils seraient d'un coût moindre pour une qualité identique, voire meilleure, à celle des produits du marché.

L'invention a pour but de remédier aux inconvénients de l'art antérieur et de fournir un nouveau sucre cuit répondant nettement mieux que les produits existants aux attentes des confiseurs et aux différentes exigences de la pratique, c'est à dire possédant une stabilité sensiblement améliorée au stockage.

A l'issue de recherches approfondies, la société demanderesse a eu le mérite de trouver que ce but pouvait être atteint et qu'il était possible contre toute attente de préparer un sucre cuit stable bien que comportant une teneur en eau élevée, c'est à dire supérieure à 4 %.

Ce sucre cuit peut être qualifié de "stable" dans la mesure où, au cours du temps, il n'a pas tendance :
- ni à devenir collant,
- ni à "grainer", ni à "tourner" en devenant opaque et blanc en surface ou à coeur,
- ni à se déformer aux températures estivales habituelles aux climats tempérés.

La société demanderesse a découvert que, de façon surprenante et inattendue, pour obtenir un sucre cuit stable, présentant une teneur en eau anormalement élevée, il convenait à la fois de réduire énormément la quantité de saccharose au sein de la confiserie par rapport aux quantités usuelles, et de veiller à ce que la température de transition vitreuse du bonbon, nécessairement abaissée du fait de la teneur en eau plus élevée, soit corrigée par le choix approprié d'une composition de carbohydrates.

En d'autres termes, il est impératif, pour qu'un tel sucre cuit soit stable, qu'il présente à la fois une teneur en saccharose inférieure à 35 % et une température de transition vitreuse au moins égale à 38°C, cette température de transition vitreuse étant mesurée à la teneur en eau effective du sucre cuit.

L'invention a donc pour objet un sucre cuit caractérisé en ce qu'il présente :
- une teneur en eau supérieure à 4 %
- moins de 35 % de saccnarose et plus ue 65 % d'une composition de carbohydrates autres que le saccharose, ces teneurs étant exprimées sur matière sèche,
- et une température de transition vitreuse au moins égale à 38°C, cette température de transition vitreuse étant mesurée à la teneur en eau effective du sucre cuit.

L'invention a trait à un sucre cuit caractérisé en ce qu'il contient plus de 4 % d'eau, en ce qu'il contient, par rapport à sa matière sèche, moins de 35 % de saccharose et plus de 65 % d'une composition de carbohydrates autres que le saccharose, et en ce qu'il présente une température de transition vitreuse au moins égale à 38°C, cette température étant mesurée pour la teneur en eau effective du sucre cuit, moins de 5% de solides de jus de fruits et moins de 10% d'hydrolysats d'amidon ayant un DE de 5 à 25.

De façon avantageuse, ce sucre cuit de sucre contient plus de 4,2 %, de préférence plus de 4,5 %, et encore plus préférentiellement plus de 4,8 % d'eau. Ainsi, il peut avantageusement être fabriqué par cuisson à une température peu élevée.

La société demanderesse a découvert qu'un tel sucre cuit stable pouvait être substantiellement exempt de maltodextrine et que l'on pouvait pallier l'effet dépressif causé par une augmentation de la teneur en eau sur la température de transition vitreuse par le choix judicieux d'une composition de carbohydrates autres que le saccharose. Cette composition présente à hauteur d'au moins 65 % de la matière sèche du sucre cuit conforme à l'invention, doit être propre à conférer au sucre cuit une température de transition vitreuse supérieure à 38°C pour la teneur en eau effective du sucre cuit. La teneur en eau effective correspond à la teneur en eau finale du sucre cuit dès la fin de la fabrication.

Des compositions de carbohydrates propres à conférer une température de transition vitreuse appropriée peuvent être des compositions présentant des poids moléculaires, respectivement en nombre et en masse, compris entre 350 et 600 et entre 600 et 1700. Ces valeurs apparaissent également donner les meilleurs résultats en terme de viscosité, de brillance et d'hygroscopicité des bonbons de sucre cuit.

Concrètement, cette composition de carbohydrates peut être choisie parmi les sirops de glucose de DE (Dextrose Equivalent) supérieur ou égal à 44 contenant moins de 10 %, de préférence moins de 5 %, et plus préférentiellement moins de 3 % de monosaccharides tels que le D-glucose ou le fructose. Ces sirops sont de préférence des sirops à teneur moyenne en maltose. En effet, il a été constaté que lorsque ces sirops présentent des teneurs en maltose très élevées, comprises entre 75 et 90 %, les sucres cuits obtenus sont plutôt hygroscopiques et sujets à la casse lors de leur mise sous papillotes. De plus, il est plus difficile avec ces sirops de produire des sucres cuits ayant une température de transition vitreuse dépassant 38°C lorsqu'ils présentent, conformément à l'invention, une teneur particulièrement élevée en eau. C'est ainsi que l'on utilise de préférence, selon l'invention, des sirops contenant de 45 à 75 % de maltose, plus préférentiellement de 45 à 56 % de maltose, et plus préférentiellement encore de 48 à 52 % de maltose. En ce qui concerne la teneur en maltotriose de ces sirops de glucose de DE supérieur ou égal à 44, des valeurs comprises entre 0 % et environ 30 % sont préférées, mais des teneurs comprises entre environ 5 % et environ 25 % sont encore plus avantageuses.

De façon surprenante et inattendue, on a pu constater que ces teneurs moyennes en maltose permettaient d'obtenir plus facilement une microcristallisation du maltose, pour les teneurs en eau des bonbons imposées conformément à l'invention, que ne le permettaient des teneurs en maltose plus élevées.

De tels sirops de maltose peuvent être produits soit directement par hydrolyse d'amidon, notamment sous l'action d'une béta-amylase, soit indirectement par mélange de produits liquides ou solides, dont un au moins d'entre eux est riche en maltose.

Dans ce cas, le sucre cuit de sucre conforme à l'invention contient de préférence de 35 à 75 % de maltose, plus préférentiellement de 38 à 65 % de maltose et encore plus préférentiellement de 42 à 50 % de maltose par rapport à sa matière sèche.

La composition de carbohydrates susceptible d'être utilisée selon l'invention peut également être constituée, en tout ou partie, desdits sirops à teneur moyenne en maltose, mais hydrogénés. Dans ce cas, les bonbons obtenus sont encore moins intensément colorés.

La composition de carbohydrates susceptible d'être utilisée selon l'invention, peut également être des oligosaccharides et des polysaccharides réputés peu digestibles c'est à dire moins digestibles que ne le sont les sucres. Il peut s'agir en particulier d'oligosaccharides et de polysaccharides, de dextrines, ou de polyglucoses comme les polydextroses, tels que ceux obtenus, après hydrogénation ou non, selon le procédé décrit dans la demande de brevet EP 561.090 dont la société demanderesse est titulaire, ou encore selon le procédé décrit dans la demande de brevet EP 368.451 ou EP 593 368. Ceci est avantageux notamment lorsqu'on souhaite préparer des sucres cuits moins caloriques. Il est bien entendu possible de combiner ces produits et les sirops de maltose décrits ci-dessus.

Par contre, l'emploi de maltodextrines et de sirops de glucose de DE inférieur à 44 est en général à éviter. En effet, les masses cuites ainsi obtenues, avec une teneur en eau supérieure à 4 %, sont difficiles à couler ou à former en raison de leur trop forte viscosité mais aussi en raison de leur particularité de devenir trop élastiques. Sans vouloir se lier à une quelconque théorie, il semble que les problèmes rencontrés sur les lignes de fabrication soient dus au fait que les produits de DE inférieur à 44 contiennent de trop fortes quantités de polysaccharides de très haut poids moléculaire.

On évite également d'employer des compositions de carbohydrates contenant plus de 10 % de monosaccharides, qui communiquent toujours une hygroscopicité élevée au sucre cuit.

En ce qui concerne le saccharose, pour des raisons de stabilité, on préfère que sa teneur dans le sucre cuit soit, sur matière sèche, inférieure à 30 %, plus préférentiellement inférieure à 25 % et plus préférentiellement encore inférieure à 15 %.

De manière surprenante et inattendue, la Société Demanderesse a constaté que la réduction de la teneur en saccharose n'agit pas de façon sensible sur le caractère sucré du sucre cuit obtenu conformément à l'invention, plus particulièrement si l'on utilise des sirops ayant une teneur moyenne en maltose ou en maltitol. Pour ajuster les qualités organoleptiques des sucres cuits obtenus conformément à l'invention, on peut utiliser sans aucun inconvénient les édulcorants intenses, les arômes et/ou les exhausteurs de goût et d'arôme comme le maltol ou l'éthyl maltol. Il faut aussi remarquer que dans certains cas, une réduction des quantités d'arôme et d'acides peut être effectuée dans les sucres cuits conformes à l'invention.

Une autre caractéristique du sucre cuit conforme à l'invention est celle de présenter une activité de l'eau supérieure à celle d'un sucre cuit habituel. D'ordinaire, le sucre cuit conforme à l'invention possède une activité de l'eau supérieure à 0,30. Dans le cas préféré, c'est à dire celui des bonbons présentant des teneurs en eau encore plus élevées, l'activité de l'eau est supérieure à 0,32, voire supérieure à 0,35.

La société demanderesse a remarqué qu'une stabilité encore plus grande est obtenue en faisant en sorte que la température de transition vitreuse, mesurée pour la teneur en eau effective du sucre cuit, soit au moins égale à 40°C, l'idéal étant de dépasser 43°C et mieux encore de dépasser 45°C.

Le sucre cuit conforme à l'invention, qui peut être n'importe quel type de sucre cuit tel que un bonbon dur transparent, un bonbon dur étiré, un bonbon dur fourré, un bonbon dur givré, ou autres, présente plusieurs avantages.

Il peut être fabriqué à plus basse température que d'ordinaire, ce qui permet de réduire de façon notable les coûts de fabrication mais aussi de limiter les temps d'immobilisation de matériel. En général, les températures de cuisson peuvent être abaissées de plusieurs degrés et être choisies entre 130 et 150°C. Très souvent, cette réduction atteint de 5 à 20°C par rapport aux températures usuelles.

Il a été constaté par ailleurs que dans la grande majorité des cas, les masses cuites sont à haute température moins visqueuses que les masses cuites conventionnelles pour bonbons de sucre. En conséquence, la fabrication par coulage s'avère au moins aussi aisée que pour les formulations habituelles.

Le sucre cuit conforme à l'invention est par ailleurs peu hygroscopique. Il a été constaté que les vitesses de reprise en eau de l'atmosphère ambiante sont plus faibles que celles des sucres cuits traditionnels dès les premiers jours suivant la fabrication et que par la suite une cristallisation est possible. Ceci est le cas en particulier lors de l'utilisation de sirops de maltose ou de maltitol, et notamment, de façon inattendue, lors de l'emploi de sirops présentant une teneur en maltose ou en maltitol moyenne, c'est à dire une teneur de 45 % à 75 % par rapport à la composition sèche. La cristallisation reste dans tous les cas invisible à l'oeil nu, de sorte que le sucre cuit présente l'avantage de demeurer totalement transparent avec une haute brillance.

Le sucre cuit conforme à l'invention a également tendance à être de couleur très claire. Ceci paraît s'expliquer surtout par la présence d'une quantité de produits d'inversion de saccharose nettement plus faible que celles retrouvées habituellement pour ce genre de confiserie.

Enfin, le sucre cuit conforme à l'invention est très stable à la température et n'a pas tendance à s'écouler ou à se déformer aux températures estivales sous nos climats tempérés.

L'invention concerne également un procédé de préparation d'un nouveau sucre cuit stable, bien que comportant plus d'eau que d'ordinaire. Ce procédé selon la revendication 7, se caractérise en ce qu'il comprend la préparation d'un sirop contenant sur sec moins de 35 % de saccharose et plus de 65 % d'une composition de carbohydrates autres que le saccharose propre à conférer au sucre cuit une température de transition vitreuse, mesurée pour sa teneur en eau effective, au moins égale à 38°C. Il se caractérise aussi en ce qu'il comprend la cuisson du sirop ainsi préparé à une température suffisante pour permettre la vitrification d'une masse cuite contenant plus de 4 %, de préférence plus de 4,2 % et plus préférentiellement encore plus de 4,5 % d'eau.

Les autres opérations unitaires de fabrication du nouveau sucre cuit peuvent être identiques à celles réalisées d'ordinaire. C'est ainsi que l'on peut indifféremment façonner le sucre cuit par des techniques connues de coulage, de formage ou d'extrusion, après ajout d'édulcorants intenses, d'agents colorants, aromatisants ou autres.

Il convient de signaler que la quantité d'eau à ajouter pour préparer le sirop de carbohydrates destiné à fabriquer le sucre cuit de sucre de l'invention peut être avantageusement fortement réduite par rapport aux quantités habituelles, compte tenu du fait de l'emploi d'une plus faible quantité de saccharose par rapport à l'ordinaire.

Enfin, l'invention a pour objet l'utilisation d'une composition de carbohydrates selon la revendication 9, ayant un poids moléculaire en nombre de 350 à 600 et un poids moléculaire en masse de 600 à 1700, pour la fabrication d'un bonbon stable de sucre cuit selon l'invention, contenant moins de 35 % de saccharose et plus de 4 % d'eau, moins de 5% de solides de jus de fruit et moins de 10% d'hydrolysats d'amidon ayant un DE de 5 à 25. De préférence, le sucre cuit présente toutes les caractéristiques spécifiées ci-avant.

L'invention pourra être mieux comprise à la lumière des exemples suivants qui se veulent illustratifs de l'invention et non pas limitatifs.

### Exemple 1

Comparaison de la stabilité de différents sucres cuits de sucre.

On prépare plusieurs sucres cuits de sucre en procédant à la cuisson des mélanges suivants ayant tous une matière sèche initiale voisine de 75 % :
- un premier mélange composé en sec de 50 % de saccharose et de 50 % d'un sirop de glucose de DE voisin de 30, commercialisé par la demanderesse sous l'appellation ROCLYS ^{R} C30 (mélange M1, selon l'art antérieur),
- un deuxième mélange composé, en sec, de 50 % de saccharose et de 50 % d'un sirop de glucose de DE voisin de 42, commercialisé par la demanderesse sous le nom de ROCLYS ^{R} A42 (mélange M2, selon l'art antérieur),
- un troisième mélange composé, en sec, de 50 % de saccharose et de 50 % d'un sirop de DE voisin de 47, commercialisé par la demanderesse sous le nom de FLOLYS ^{R} C47 (mélange M3, selon l'art antérieur). Ce sirop contient, sur sec, entre 48 et 52 % de maltose,
- et enfin un quatrième mélange composé, en sec, de 20 % de saccharose et de 80 % du sirop de glucose FLOLYS ^{R} C47 ci-dessus (mélange M4, conforme à l'invention).

Ces quatre mélanges sont cuits à feu nu, à une température choisie, comprise entre 135 et 145°C, de manière à obtenir des sucres cuits de sucre contenant 4,5 % d'eau environ. Par commodité, les produits obtenus à partir des mélanges M1, M2, M3 et M4 sont appelés respectivement B1, B2, B3 et B4.

On prépare également des sucres cuits à partir du mélange M2 mais en procédant à une cuisson à 155°C à feu nu de façon à obtenir une teneur résiduelle en eau voisine de 3 %. On appelle B5 les produits ainsi obtenus(selon l'art antérieur).

Les caractéristiques des différents produits sont les suivantes :
- Sucres cuits B1 :
   * Couleur : jaune très pâle,
   * Composition sur sec : D glucose : 1,5 %
      Maltose : 6,0 %
      Saccharose : 50,0 %
   * Température de transition vitreuse : 37°C
- Sucres cuits B2 :
   * Couleur : jaune très pâle,
   * Composition sur sec : D glucose : 9,0 %
      Maltose : 7,5 %
      Saccharose : 50,0 %
   * Température de transition vitreuse : 34°C
- Sucres cuits B3 :
   * Couleur : jaune très pâle
   * Composition sur sec : D glucose : 1,5 %
      Maltose : 25,0 %
      Saccharose : 50,0 %
   * Température de transition vitreuse : 36°C
- Sucres cuits B4 :
   * Couleur : non coloré
   * Composition sur sec : D glucose : 2,0 %
      Maltose : 40,0 %
      Saccharose : 20,0 %
   * Température de transition vitreuse : 44°C
- Sucres cuits B5 :
   * Couleur : jaune foncé
   * Composition sur sec : D glucose : 9,0 %
      Maltose : 7,5 %
      Saccharose : 50,0 %
   * Température de transition vitreuse : 48°C

Les différents sucres cuits sont conservés pendant 6 mois comprenant une période estivale.

On constate qu'après ce délai, seuls les sucres cuits B4 et B5 sont restés inchangés, c'est à dire n'ont pas eu tendance ni à devenir collants, ni à grainer ou à tourner, ni à se déformer.

Les sucres cuits B4 conformes à l'invention sont aussi stables que le sont les produits témoins B5, bien qu'ils présentent une teneur en eau supérieure.

### Exemple 2

Comparaison du comportement de différents sirops de maltose.

On prépare plusieurs autres sucres cuits de sucre contenant 4,2 % d'eau environ et sur sec 20 % de saccharose seulement. Pour cela, on utilise les mélanges suivants :
- le mélange M4 de l'exemple 1,
- un mélange comprenant sur sec 20 % de saccharose et 80 % de sirop de maltose vendu par la demanderesse sous le nom FLOLYS ^{R} D57 (mélange M6). La matière sèche de ce sirop est constituée d'environ 70 % de maltose et d'environ 3 % de D glucose,
- et un mélange comprenant sur sec 20 % de saccharose et 80 % d'un sirop de maltose contenant environ 92 % de maltose et environ 4 % de D glucose par rapport à sa matière sèche (mélange M7).

On constate que ces produits obtenus conformément à l'invention sont tous très stables et très clairs.

Les bonbons obtenus par emploi du mélange M7 sont jugés plus cassants que les bonbons contenant le mélange M4 ou le mélange M6. On préfère ces derniers, car ils présentent une température de transition vitreuse comprise entre 48 et 50°C alors que pour les premiers cette température de transition vitreuse n'est que de 41°C environ.

### Exemple 3

Comparaison des viscosités à haute température de différentes masses cuites.

On prépare, en utilisant un cuiseur pilote, des sucres cuits par coulage en moules.

On utilise pour cela :
- un mélange composé, en sec, de 10 % de saccharose et de 90 % de sirop FLOLYS ^{R} C47 décrit à l'exemple 1 (mélange M8),
- uniquement le sirop FLOLYS ^{R} C47,
- et le mélange M1 donné à l'exemple 1 (selon l'art antérieur).

On réalise dans les trois cas une cuisson à 140°C environ avec application d'un vide, de façon à obtenir des teneurs en eau voisines de 5,0 %.

On constate que les viscosités des masses cuites, mesurées à l'aide d'un appareil ROTOVISKO PK100 en utilisant un cône PK5 1°, sont dans le cas de l'utilisation des mélanges M8 et M1 très proches pour une plage de température située entre 140° et 120°C, et correspondant aux températures habituelles de coulage. La masse cuite préparée par le seul emploi du sirop FLOLYS ^{R} est en revanche légèrement plus visqueuse.

Dans tous les cas, il est possible sans difficultés majeures de procéder à un coulage.

Au stockage, les bonbons préparés essentiellement ou exclusivement à partir du sirop FLOLYS ^{R} s'avèrent plus stables que ceux composés du mélange M1. En effet, ces derniers contrairement aux premiers tendent à grainer et à devenir opaques avec le temps.

## Revendications

1. Sucre cuit contenant, sur matière sèche, moins de 5% de solides de jus de fruits, moins de 10% d'hydrolysats d'amidon ayant un DE de 5 à 25, moins de 35 % de saccharose et plus de 65 % d'une composition de carbohydrates autres que le saccharose, présentant une teneur en eau supérieure à 4 % en poids et une température de transition vitreuse d'au moins 38°C, ladite température étant mesurée pour sa teneur en eau effective.

2. Sucre cuit selon la revendication 1, présentant une teneur en eau supérieure à 4,2 %, de préférence supérieure à 4,5 %, et plus préférentiellement supérieure à 4,8 %.

3. Sucre cuit selon l'une quelconque des revendications 1 ou 2, présentant une température de transition vitreuse au moins égale à 40°C, de préférence au moins égale à 43°C, et plus préférentiellement encore au moins égale à 45°C, ladite température étant mesurée pour sa teneur en eau effective.

4. Sucre cuit selon l'une quelconque des revendications 1 à 3, dans lequel la composition de carbohydrates autres que le saccharose est choisie parmi les oligosaccharides et polysaccharides peu digestibles, les sirops de glucose de DE supérieur ou égal à 44 contenant moins de 10 % de monosaccharides, et leurs mélanges.

5. Sucre cuit selon la revendication 4, dans lequel la composition de carbohydrates autres que le saccharose est un sirop contenant de 45 à 75 % de maltose, de préférence de 45 à 56 % de maltose et plus préférentiellement de 48 à 52 % de maltose.

6. Sucre cuit selon la revendication 4, dans lequel la composition de carbohydrates autres que le saccharose est hydrogénée.

7. Procédé de préparation d'un sucre cuit stable comprenant :
- la préparation d'un sirop contenant, sur matière sèche, moins de 5% de solides de jus de fruit, moins de 10% d'hydrolysats d'amidon ayant un DE de 5 à 25, moins de 35% de saccharose et plus de 65% d'une composition de carbohydrates autres que le saccharose, propre à conférer au sucre cuit une température de transition vitreuse au moins égale à 38°C, cette température étant mesurée pour la teneur en eau effective du sucre cuit,
- la cuisson dudit sirop à une température suffisante pour permettre la vitrification d'une masse cuite contenant plus de 4,0% d'eau en poids.

8. Procédé selon la revendication 7, dans lequel la cuisson dudit sirop est opérée à une température suffisante pour permettre la vitrification d'une masse cuite contenant plus de 4,2%, et de préférence plus de 4, 5% d'eau en poids.

9. Utilisation dans la production d'un sucre cuit contenant, moins de 5% de solides de jus de fruit, moins de 10% d'hydrolysats d'amidon ayant un DE de 5 à 25, moins de 35% de saccharose et plus de 4% d'eau, d'une composition de carbohydrates présentant un poids moléculaire en nombre compris entre environ 350 et environ 600 et un poids moléculaire en masse compris entre environ 600 et environ 1700.

10. Composition de carbohydrates convenant pour l'obtention d'un sucre cuit conforme à l'une quelconque des revendications 1 à 6 ou convenant pour être mise en oeuvre dans le procédé conforme à l'une quelconque des revendications 7 à 9, **caractérisée en ce qu'**elle présente un poids moléculaire en nombre compris entre environ 350 et environ 600 et un poids moléculaire en masse compris entre environ 600 et environ 1700.

11. Composition de carbohydrates selon la revendication 10, **caractérisée en ce qu'**elle est choisie parmi les sirops de glucose de DE ≥ 44 contenant moins de 10%, de préférence moins de 5%, et plus préférentiellement moins de 3% de monosaccharides.

12. Composition de carbohydrates selon la revendication 10 ou 11, **caractérisée en ce que** ladite composition est un sirop présentant une teneur moyenne en maltose.

13. Composition de carbohydrates selon l'une quelconque des revendications 10 à 12, **caractérisée en ce que** ladite composition est un sirop contenant de 45 à 75% de maltose, plus préférentiellement de 45 à 56% de maltose, et plus préférentiellement encore de 48 à 52% de maltose.

## Patentansprüche

1. Gekochter Zucker, der, bezogen auf die Trockenmasse, weniger als 5% Fruchtsaftfeststoffe, weniger als 10% Stärkehydrolysate mit einem Dextroseäquivalent von 5 bis 25, weniger als 35% Saccharose und mehr als 65% einer Zusammensetzung von anderen Kohlehydraten als Saccharose enthält, mit einem Wassergehalt von mehr als 4 Gew.-% und einer Glasübergangstemperatur von mindestens 38°C, wobei diese Temperatur bei seinem effektiven Wassergehalt gemessen wird.

2. Gekochter Zucker nach Anspruch 1 mit einem Wassergehalt von mehr als 4,2%, vorzugsweise mehr als 4,5% und noch bevorzugter mehr als 4,8%.

3. Gekochter Zucker nach einem der Ansprüche 1 oder 2 mit einer Glasübergangstemperatur von mindestens gleich 40°C, vorzugsweise mindestens gleich 43°C und noch bevorzugter von mindestens 45°C, wobei diese Temperatur bei seinem effektiven Wassergehalt gemessen wird.

4. Gekochter Zucker nach einem der Ansprüche 1 bis 3, bei dem die Zusammensetzung von anderen Kohlenhydraten als Saccharose aus den wenig verdaulichen Oligosacchariden und Polysacchariden, den Glucosesirups mit einem Dextroseäquivalent von mehr als oder gleich 44 und mit weniger als 10% Monosacchariden und ihren Mischungen ausgewählt ist.

5. Gekochter Zucker nach Anspruch 4, bei dem die Zusammensetzung von anderen Kohlenhydraten als Saccharose ein Sirup ist, der 45 bis 75% Maltose, vorzugsweise 45 bis 56% Maltose und noch bevorzugter 48 bis 52% Maltose enthält.

6. Gekochter Zucker nach Anspruch 4, bei dem die Zusammensetzung von anderen Kohlenhydraten als Saccharose hydriert ist.

7. Verfahren zur Herstellung von stabilem gekochten Zucker, umfassend:
- die Herstellung eines Sirups, der, bezogen auf die Trockenmasse, weniger als 5% Fruchtsaftfeststoffe, weniger als 10% Stärkehydrolysate mit einem Dextroseäquivalent von 5 bis 25, weniger als 35% Saccharose und mehr als 65% einer Zusammensetzung von anderen Kohlenhydraten als Saccharose enthält, die dem gekochten Zucker eine Glasübergangstemperatur von mindestens gleich 38°C verleihen kann, wobei diese Temperatur bei dem effektiven Wassergehalt des gekochten Zuckers gemessen wird,
- das Einkochen dieses Sirups bei einer Temperatur, die ausreicht, um die Verglasung einer gekochten Masse, die mehr als 4,0 Gew.-% Wasser enthält, zu gestatten.

8. Verfahren nach Anspruch 7, bei dem das Einkochen des Sirups bei einer Temperatur vorgenommen wird, die ausreicht, um die Verglasung einer gekochten Masse zu gestatten, die mehr als 4,2 Gew.-% und vorzugsweise mehr als 4,5 Gew.-% Wasser enthält.

9. Verwendung einer Kohlenhydratezusammensetzung mit einem Molekulargewicht als Zahlenmittel zwischen etwa 350 und etwa 600 und einem Molekulargewicht als Massenmittel zwischen etwa 600 und etwa 1700 in einer Herstellung von gekochtem Zucker, der weniger als 5% Fruchtsaftfeststoffe, weniger als 10% Stärkehydrolysate mit einem Dextroseäquivalent von 5 bis 25%, weniger als 35% Saccharose und mehr als 4% Wasser enthält.

10. Kohlenhydratezusammensetzung, geeignet für die Herstellung von gekochtem Zucker nach einem der Ansprüche 1 bis 6 oder geeignet für die Verwendung in dem Verfahren nach einem der Ansprüche 7 bis 9, **dadurch gekennzeichnet, dass** sie ein Molekulargewicht als Zahlenmittel von etwa 350 bis 600 und ein Molekulargewicht als Massenmittel von etwa 600 bis etwa 1700 aufweist.

11. Kohlenhydratezusammensetzung nach Anspruch 10, **dadurch gekennzeichnet, dass** sie aus den Glucosesirups mit einem Dextroseäquivalent ≥ 44 ausgewählt ist, die weniger als 10%, vorzugsweise weniger als 5% und noch bevorzugter weniger als 3% Monosaccharide enthalten.

12. Kohlenhydratezusammensetzung nach Anspruch 10 oder 11, **dadurch gekennzeichnet, dass** die Zusammensetzung ein Sirup mit einem mittleren Maltosegehalt ist.

13. Kohlenhydratezusammensetzung nach einem der Ansprüche 10 bis 12, **dadurch gekennzeichnet, dass** die Zusammensetzung ein Sirup ist, der 45 bis 75% Maltose, vorzugsweise 45 bis 56% Maltose und noch bevorzugter 48 bis 52% Maltose enthält.

## Claims

1. Boiled swelt containing on a dry matter basis, less than 5 % of fruit juice solids, less than 10 % of starch hydrolysates having a DE of 5 to 25, less than 35 % of sucrose and more than 65 % of a composition of carbohydrates other than sucrose having a water content above 4 % in weight and a glass transition temperature of at least 38°C, said glass transition temperature being measured for its effective water content.

2. Boiled sweet according to claim 1, having a water content greater than 4.2 %, preferably greater than 4.5 % and still more preferably greater than 4.8%.

3. Boiled sweet according any one of claim 1 or 2, having a glass transition temperature of at least 40°C, preferably of at least 43°C, and still more preferably of at least 45°C, said glass transition temperature being measured for its effective water content.

4. Boiled sweet according to any one of claims 1 to 3, in which the carbohydrate composition other than sucrose is selected among oligosaccharides and polysaccharides which are not very digestible, glucose syrups having a DE greater than or equal to 44, containing less than 10 % of monosaccharides, and mixtures thereof.

5. Boiled sweet according to claim 4, in which the carbohydrate composition other than sucrose is a syrup containing between 45 to 75 % of maltose, preferably between 45 to 56 % of maltose, and still more preferably from 48 to 52 % of maltose.

6. Boiled sweet according to claim 4 in which the carbohydrate composition other than sucrose is hydrogenated.

7. Process for the preparation of a stable boiled sweet comprising:
- the preparation of a syrup containing, on a dry matter basis, less than 5 % of fruit juice solids, less than 10 of starch hydrolysates, having a DE of 5 to 25, less than 35 % of sucrose and more than 65 % of a carbohydrate composition other than sucrose, suitable for conferring on the boiled sweet a glass transition temperature at least equal to 38°C, said glass transition temperature being measured for its effective water content,
- the boiling of the said syrup at a temperature sufficient to allow the vitrification of a massecuite containing more than 4.0 % of water in weight.

8. Process according to claim 7 in which the boiling of said syrup is performed at a temperature sufficient to allow the vitrification of a massecuite containing more than 4.2 % and preferably more than 4.5% of water in weight.

9. Use in the manufacture of a boiled sweet containing less than 5 % fruit juice solids, less than 10 % of starch hydrolysates having a DE of 5 to 25, less than 35 % of sucrose and more than 4 % of water, of a composition of carbohydrate having a molecular weight in number comprised between about 350 and about 600 and a molecular weight in weight comprised between about 600 and about 1,700. 600 and a molecular weight in weight comprised between about 600 and about 1,700.

10. Carbohydrate composition suitable for obtaining a boiled sweet according to any one of claims 1 to 6 or suitable for use in the process according to any one of claims 7 to 9, **characterized in that** it has a molecular weight in number comprised between about 350 and about 600 and a molecular weight in weight comprised between about 600 and about 1,700.

11. Carbohydrate composition according to claim 10, **characterized in that** it is selected among the syrup of glucose having a DE ≥ 44 containing less than 10 %, preferably less than 5 % and still more preferably less than 3 % of monosaccharides.

12. Carbohydrate composition according to claim 10 or 11, **characterized in that** said composition is a syrup having an average maltose content.

13. Carbohydrate composition according to any one of claims 10 to 12, **characterized in that** said composition is a syrup containing from 45 to 75 % of maltose, preferably from 45 to 56 % of maltose and still more preferably 48 to 52 % of maltose.
